# EUROPEAN PATENT APPLICATION

(11) **EP 2 552 183 A1**
(43) Date of publication of application: **30.01.2013**
(21) Application number: 11759236.0
(22) Date of filing: 14.03.2011
(51) Int. Cl.: H05K 7/20, G09F 9/00

(54) **INFORMATION TERMINAL APPARATUS**

(30) Priority: 25.03.2010 JP 2010070794
(71) Applicant: NEC Corporation, Tokyo 108-8001 (JP)
(72) Inventor: SAITO, Yoshiyuki, Tokyo 141-0032 (JP); MACHIDA, Satoshi, Tokyo 141-0032 (JP)
(74) Representative: Vossius & Partner
(86) International application number: PCT/JP2011/055912
(87) International publication number: WO 2011/118430

(57) **Abstract**

Efficient heat exhaust is performed in accordance with inclination of a housing of an information terminal apparatus which is caused depending on a way of instaling the information terminal apparatus or of an operator's carrying the information terminal apparatus.

An information terminal apparatus according to the present invention is characterized by that, in the information terminal apparatus having a heat exhaust system inside its housing, the heat exhaust system performs heat exhaust control by which heat is exhausted from a higher portion in positional difference of the information terminal apparatus which is generated by inclination of the information terminal apparatus.

## Description

### Technical Field

The present invention relates to heat exhaust in an information terminal apparatus.

### Background Art

A conventional information terminal apparatus such as a personal computer is usually set basically in a constant direction. For this reason, in such a information terminal apparatus, heat is exhausted in only one direction through one certain surface of a housing which constitutes the apparatus. Accordingly, there is a possibility that, when the surface is covered in any way, it becomes impossible to efficiently exhaust heat generated within the information terminal apparatus.

In order to solve such a problem, patent document 1 discloses a technology which, by disposing a plurality of exhaust outlets and corresponding fans at respective side surface sections of an information terminal apparatus such as a plasma display panel, enables sufficient heat exhaust even when the information terminal apparatus is set with 90 degree rotation or set upside down.

### Citation List

### Patent Document

Patent Document 1: Japanese Patent Application Laid-Open No. 2000-132112

### Summary of Invention

### Technical Problem

However, since the technology disclosed in patent document I requires a plurality of fans, there arises a problem in that the technology is not suitable for a portable type information terminal apparatus and the like, in the aspect of both weight and structure. There also arises a problem with respect to the technology disclosed in patent document 1 in that it requires control of a plurality of fans and accordingly the control becomes complicated.

Accordingly, the objective of the present invention is to solve the problem described above and thus provide an information terminal apparatus which performs efficient heat exhaust.

### Solution to Problem

An information terminal apparatus according to the present invention is characterized by that, in the information terminal apparatus comprising a heat exhaust system inside its housing, the heat exhaust system performs heat exhaust control by which heat is exhausted from a higher portion in positional difference of the information terminal apparatus, which is generated by inclination of the information terminal apparatus.

### Advantageous Effects of Invention

According to the present invention, obtained is an effect that efficient heat exhaust can be performed in accordance with inclination of the housing of the information terminal apparatus, which is generated depending on a way of setting the information terminal apparatus or of an operator's carrying the information terminal apparatus.

### BRIEF DESCRIPTION OF THE DRAWINGS

Fig. 1 shows an external view of an exemplary embodiment according to the present invention.
Fig. 2 is a configuration diagram of the exemplary embodiment according to the present invention.
Fig. 3 is a diagram showing a cross-sectional view taken on line A-A in the configuration diagram of the exemplary embodiment according to the present invention.
Fig. 4 is a configuration diagram of a rotating fan unit of the exemplary embodiment according to the present invention.
Fig. 5 is a configuration diagram of a rotating object of the exemplary embodiment according to the present invention.
Fig. 6 is a configuration diagram of an exhaust plate of the exemplary embodiment according to the present invention.
Fig. 7 is a configuration diagram of an exhaust guide of the exemplary embodiment according to the present invention.
Figs. 8 is a diagram showing linkage between the exhaust plate and the exhaust guide of the exemplary embodiment according to the present invention.
Fig. 9 is a diagram showing a state of an information terminal apparatus of the exemplary embodiment according to the present invention.
Fig. 10 is a diagram showing a state of heat exhaust (1) in the exemplary embodiment according to the present invention.
Fig. 11 is a diagram showing a state of heat exhaust (2) in the exemplary embodiment according to the present invention.

### Description of Embodiment

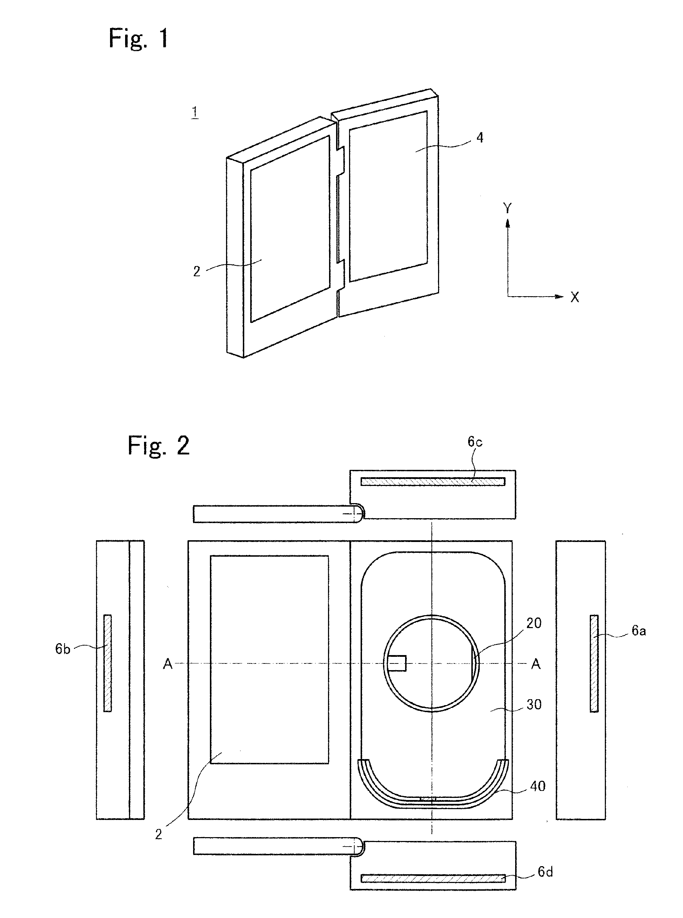

Hereinafter, an exemplary embodiment of the present invention will be described in detail, with reference to drawings. Fig. 1 is an external view of an exemplary embodiment according to the present invention. In Fig. 1, an information terminal apparatus I comprises a display screen 2 and a display screen 4. In the state shown in Fig. 1, an operator watches images on the display screen 2 and on the display screen 4 setting the top side of the information terminal apparatus 1 to Y-direction. However, in cases of some sorts of images displayed on the display screen 2 and on the display screen 4, it is also expected that the operator watches the images by rotating the information terminal apparatus 1 90 degrees to X-direction.

In Fig. 1, the information terminal apparatus adopted as an exemplary embodiment has a mechanism where the housing equipped with the display screens, 2 and 4, opens and closes like two facing pages of a book. However, the present invention is not limited to the exemplary embodiment, and can be applied to an information terminal apparatus which is configured with only one display screen and has a rectangular parallelepiped shape.

Fig. 2 is a configuration diagram of the exemplary embodiment according to the present invention. In the information terminal apparatus 1, within the housing equipped with the display screen 4 (not illustrated in the diagram), provided are a rotating fan unit 10 (not illustrated in the diagram), a rotating object 20, an exhaust plate 30 and an exhaust guide 40. Further, on the side surfaces of the housing equipped with the display screen 4 (not illustrated in the diagram), exhaust outlets 6a, 6b, 6c and 6d are provided. However, not every one of them is necessarily required. There may be a case where the exhaust outlet 6a located on the side surface closest to the operator is covered in usual use. Of which side surface an exhaust outlet is covered is appropriately determined.

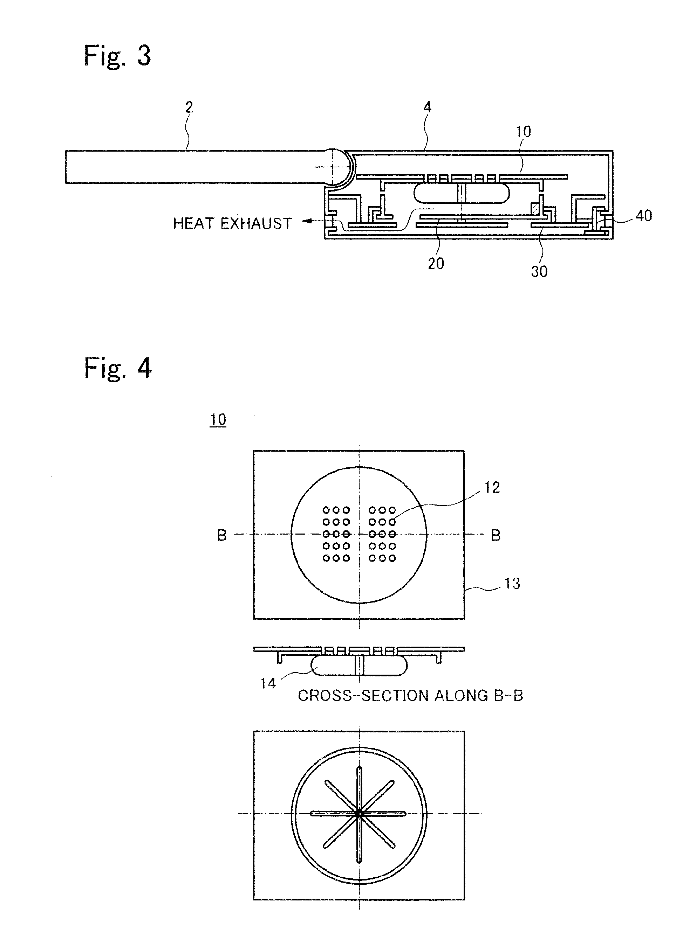

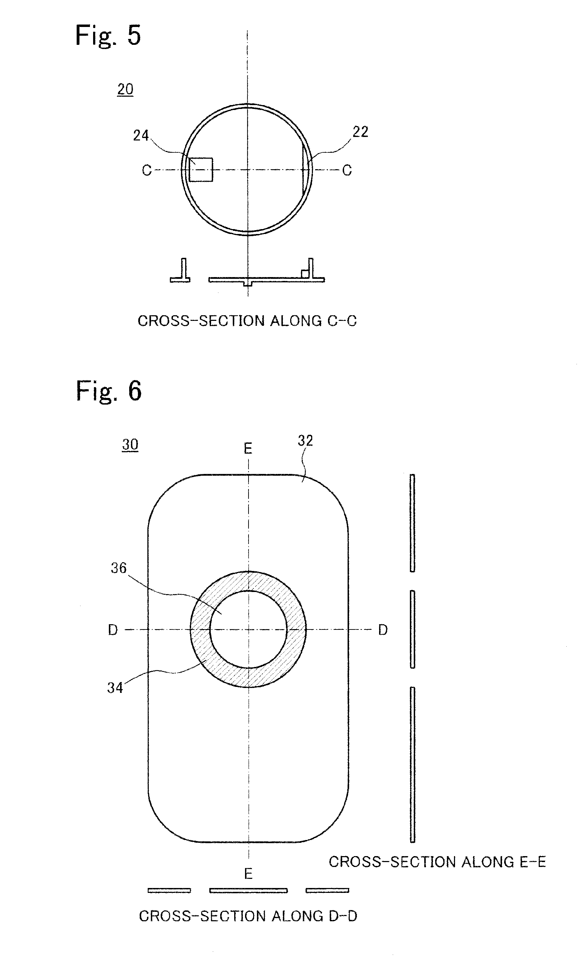

Fig. 3 is a diagram showing a cross-sectional view taken on line A-A in Fig. 2. In the information terminal apparatus 1, within the housing equipped with the display screen 4, provided are a rotating fan unit 10, a rotating object 20, an exhaust plate 30 and an exhaust guide 40. Here, in Fig. 3, a flow of exhausted heat is indicated by a directional line. This directional line indicates that an air flow is generated by the rotating fan unit 10, and accordingly heat within the housing is exhausted from a heat outlet 24 of the rotating object 20 (refer to Fig. 5) to the exhaust outlet 6b on a side surface of the housing, through an exhaust outlet opening 34 of the exhaust plate 30 (refer to Fig. 6).

Fig. 4 is a diagram showing a configuration of the rotating fan unit 10. The rotating fan unit 10 is composed of an air intake plate 13 having air intake holes 12. fins 14 and a motor to rotate the fins (not illustrated in the diagram).

Fig. 5 is a diagram showing a configuration of the rotating object 20. The rotating object 20 has a disk-like shape, and is provided with a weight 22 at a part of its circumference section. Further, the heat outlet 24 is located at a position which is approximately symmetrical to the weight 22 about a rotary shaft of the rotating object 20.

Fig. 6 is a diagram showing a configuration of the exhaust plate 30. When roughly divided, the exhaust plate 30 is made up of two components. They are an exhaust plate (outer) 32 and an exhaust plate (inner) 36. These two components configure an exhaust outlet opening 34.. Here, the exhaust plate (outer) 32 and the exhaust plate (inner) 36 are fixed to the housing or to another component by a screw or the like.

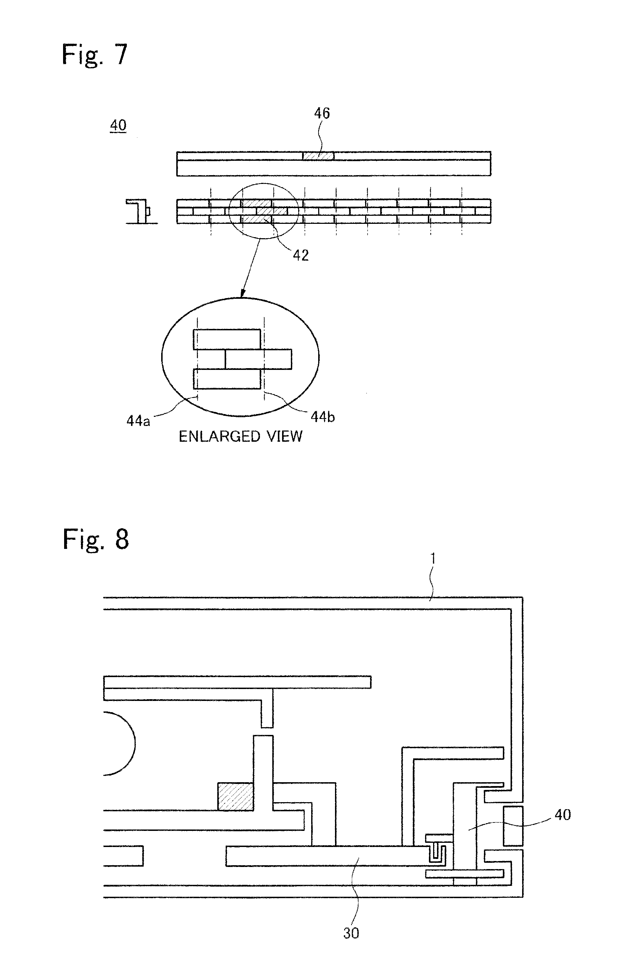

Fig. 7 is a diagram showing a configuration of the exhaust guide 40. The exhaust guide 40 is configured by connecting a plurality of exhaust guide cells 42. Describing in detail, the exhaust guide cells 42 are provided with connection shafts 44a and connection shafts 44b, and each of the exhaust guide cells 42 is connected with neighboring ones of the exhaust guide cells 42 by one of the connection shafts. Because the connecting shafts have flexibility, the exhaust guide 40 as a whole can have a straight line shape or a circular arc shape. Further, at a part of the exhaust guide cells 42 constituting the exhaust guide 40, a weight 46 is provided. Furthermore, covering the whole body of the exhaust guide 40 with a flexible sheet made from a rubber, a film or the like has the effect of eliminating gaps created by the connections between the exhaust guide cells 42. Here, the above-mentioned sheet does not diminish the flexibility of the exhaust guide 40.

Fig. 8 is a diagram showing linkage between the exhaust plate 30 and the exhaust guide 40. Since the exhaust guide 40 can have a straight line shape or a circular arc shape, as described above, it is configured to move along the exhaust plate (outer) 32. At that time, the combination of the exhaust plate (outer) 32 and the exhaust guide 40 has a structure where, as shown in Fig. 8, a slot is fabricated at the outer edge of the exhaust plate (outer) 32 and a part of the exhaust guide 40 is fitted into the slot. In the present exemplary embodiment, the "fitted into" means that a part of the exhaust guide 40 is put into the exhaust plate (outer) 32 in a state of causing no difficulty in the movement of the exhaust guide 40 along the exhaust plate (outer) 32.

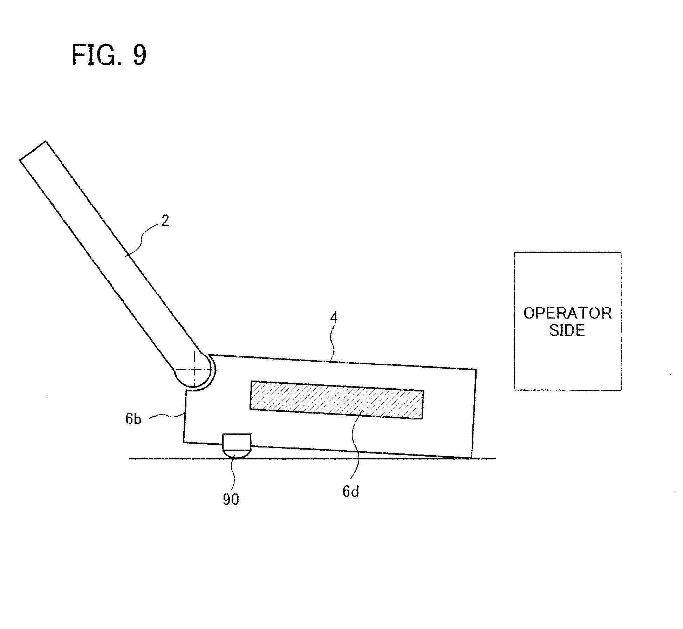

Next, operation of the present invention will be described in detail by using the above-described drawings and Figs. 9-11. The following description will be given of how heat is exhausted in the case where, as shown in Fig. 9, the information terminal apparatus 1 is installed on a flat surface such as on a desk.

Fig. 9 is a diagram showing a state where, in the case the information terminal apparatus 1 is installed on a flat surface such as on a desk, the housing of the information terminal apparatus I on the side equipped with the display screen 4 is inclined by a projection 90 provided on the information terminal apparatus 1.

In Fig. 9, illustrated is a position of a person operating the information terminal apparatus 1 (hereinafter, referred to as an operator). In this situation, of the housing of the information terminal apparatus I on the side equipped with the display screen 4. the operator side is lower in position and the side of the projection 90 is higher.

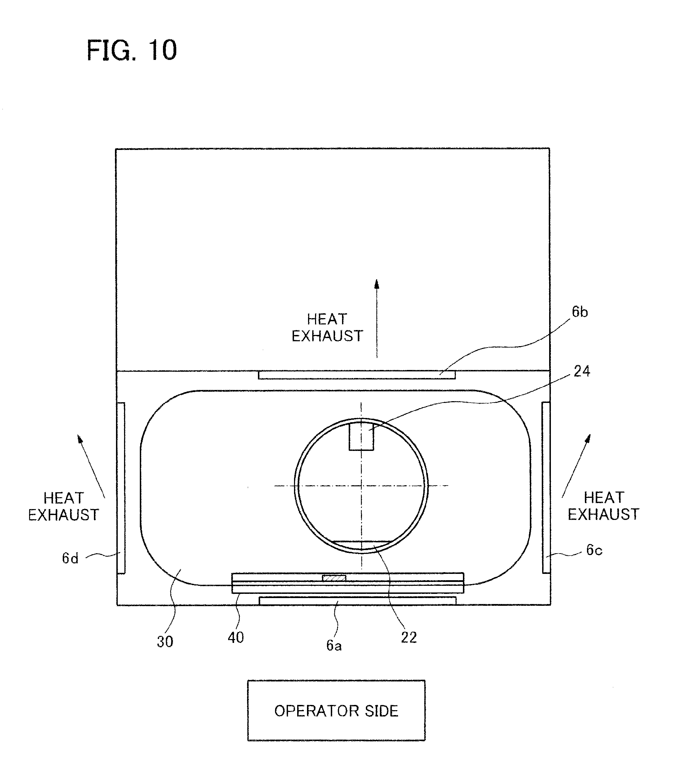

Fig. 10 is a diagram showing heat exhaust (1) in the installation state of the information terminal apparatus 1 shown in Fig. 9. An internal structure of the information terminal apparatus 1 is also shown in Fig. 9. The weight 22 of the rotating object 20, which is located inside the housing shown in Fig. 10, moves to the operator side in accordance with rotational movement of the rotating object, which is caused by the inclination of the housing of the information terminal apparatus 1 on the side equipped with the display screen 4, through functioning of the own weight of the weight 22. As a result, the heat outlet 24 of the rotating object 20 comes to be located on the opposite side of the weight 22.

In the present exemplary embodiment, an air flow is generated by the rotating fan unit 10 shown in Fig. 4 operating in the situation described above. Then, in the present exemplary embodiment, heat within the housing is exhausted from the heat outlet 24 of the rotating object 20 to the exhaust outlets 6b, 6c and 6d on the respective side surfaces of the housing, through the exhaust outlet opening 34 shown in Fig. 6.

Further, in the exhaust guide 40, the inclination of the housing of the information terminal apparatus I on the side equipped with the display screen 4 causes the own weight of the weight 46 to function. As a result, the exhaust guide 40 moves along the outer edge of the exhaust plate 30 and thereby comes to be located on the operator side. This gives an effect that, while the side surface of the housing on the operator side has the exhaust outlet 6a, the information terminal apparatus 1 does not exhaust heat to the operator side, because the exhaust guide 40 prevents heat exhaust to the exhaust outlet 6a.

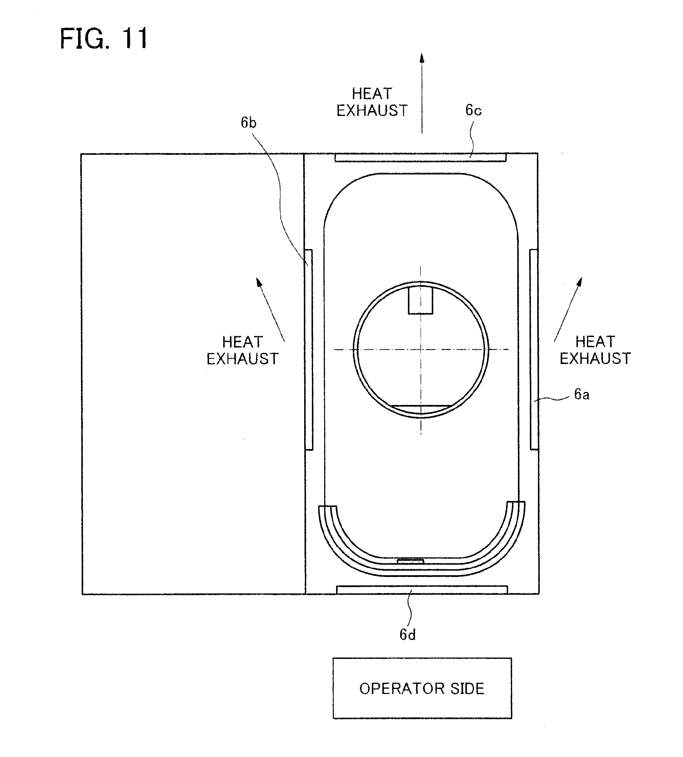

Fig. 11 is a diagram showing a state of heat exhaust (2) in the exemplary embodiment according to the present invention. Fig. 11 shows a situation where, of the housing of the information terminal apparatus 1 on the side equipped with the display screen 4, the side of the exhaust outlet 6d is lower in position and the side of the exhaust outlet 6c is higher, which is generated by an operator's hand-carrying the apparatus or the like. The principle of heat exhaust (2) is the same as that of heat exhaust (1) described above, and the result is that heat is exhausted through the exhaust outlets 6a. 6b and 6c.

While the exemplary embodiment has been described above, various modifications and changes can be made to the exemplary embodiment and specific examples without departing from broad spirit and scope of the present invention defined by the claims.

This application claims priority from Japanese Patent Application 2010-070794 filed on March 25, 2010. the contents of which are incorporation herein by the reference in their entirety.

### Reference Signs List

- 1: information terminal apparatus
- 2: display screen
- 4: display screen
- 6a: exhaust outlet
- 6b: exhaust outlet
- 6c: exhaust outlet
- 6d: exhaust outlet
- 10: rotating fan unit
- 12: air intake hole
- 13: air intake plate
- 14: fin
- 20: rotating object
- 22: weight
- 24: heat outlet
- 30: exhaust plate
- 32: exhaust plate (outer)
- 34: exhaust outlet opening
- 36: exhaust plate (inner)
- 40: exhaust guide
- 42: exhaust guide cell
- 44a: connection shaft
- 44b: connection shaft
- 46: weight
- 90: projection

## Claims

1. An information terminal apparatus comprising a heat exhaust system in a housing of the information apparatus, **characterized in that**
the heat exhaust system performs heat exhaust control by which heat is exhausted from a higher portion in positional difference of the information terminal which is generated by inclination of the information terminal apparatus.

2. The information terminal apparatus according to claim 1, **characterized in that** the housing is an approximately rectangular parallelepiped in shape, is provided with a display screen on an upper surface of the housing, and includes an opening for exhausting heat on a side surface of the housing.

3. The information terminal apparatus according to claims 1 or 2, **characterized in that**:
a first heat exhaust system which carries out the heat exhaust control includes
a section equipped with a rotary shaft and a disk-shaped rotating object with the rotary shaft as its center,
a rotating fin disposed in the vicinity of the rotating object, and
a driving source which drives the rotating fin,
the rotating object is provided with a weight at a part of it, and includes an opening at a position which is approximately symmetrical to the weight about the rotary shaft, and
caused by inclination of the information terminal apparatus, a position of the opening is determined by rotation of the rotating object induced by the own weight of the weight and, as a result of the driving source's driving the rotating fin, heat is exhausted through the opening.

4. The information terminal apparatus according to claim 3, **characterized in that**:
a second heat exhaust system which carries out the heat exhaust control includes,
an exhaust guide, and
an exhaust plate, and
caused by inclination of the information terminal apparatus, the exhaust guide moves by the effect of the own weight of a weight disposed on the exhaust guide, in a manner of being fitted to an outer edge of a side surface of the heat exhaust plate, and thereby is positioned to cover an opening for exhausting heat on a side surface of the housing.

5. The information terminal apparatus according to claim 1 to 4, **characterized by** further comprising:
in addition to a first housing including the heat exhaust system, a second housing which is connected with the first housing.
